# EUROPEAN PATENT SPECIFICATION

(11) **EP 4 411 177 B1**
(45) Date of publication and mention of the grant of the patent: **15.10.2025**
(21) Application number: 23154197.0
(22) Date of filing: 31.01.2023
(51) Int. Cl.: F16H 57/04

(54) **ELECTRIC DRIVE AXLE ASSEMBLY AND VEHICLE COMPRISING THE SAME**
ELEKTRISCHE ANTRIEBSACHSENANORDNUNG UND FAHRZEUG DAMIT
ENSEMBLE ESSIEU MOTEUR ÉLECTRIQUE ET VÉHICULE LE COMPRENANT

(43) Date of publication of application: 07.08.2024
(73) Proprietor: Scania CV AB, 151 87 Södertälje (SE)
(72) Inventor: KARLSSON, Stefan, 645 61 Stallarholmen (SE); INGESSON, Mattias, 117 56 Stockholm (SE); ARNELÖF, Per, 136 66 Vendelsö (SE); FORSBERG, Jörgen, 647 35 Mariefred (SE); BERGDAL, Tobias, 403 20 Göteborg (SE)
(74) Representative: Scania CV AB

(56) References cited:
- DE-B3- 102020 128 934
- US-B1- 11 519 552
- US-B2- 11 231 103

## Description

### TECHNICAL FIELD

The present disclosure relates in general to an electric drive axle assembly for a vehicle, and to a vehicle comprising an electric drive axle assembly.

### BACKGROUND

In view of the ongoing electrification of vehicles, one of the technologies that is gaining focus today is that of electric drive axles (also known as electric axles or eAxles). An electric drive axle may constitute the whole powertrain of a vehicle, or it may be a part of powertrain comprising more than one propulsion unit (such as in case of a hybrid vehicle). An electric drive axle assembly comprises an electrical machine, typically powered by batteries, serving as the propulsion unit and a transmission assembly.

In a conventional central drive powertrain, for example a powertrain of a conventional combustion engine driven heavy vehicle, the propulsion unit and the transmission are connected via a propeller shaft to the drive shaft and the associated drive wheels. In contrast, an electric drive axle is based on a powertrain configuration where an electrical machine, serving as a propulsion unit of the vehicle, and a transmission assembly are arranged at the drive shaft. Thereby, there is no need for a propeller shaft for transferring propulsion power from the propulsion unit to the drive wheels of the vehicle. One of the advantages of an electric drive axle is that it typically occupies less space compared to a central drive powertrain and thereby leaves more space in the vehicle for accommodating for example batteries. An increased available space for batteries inherently means that more energy may be stored onboard the vehicle, may in turn increase the possible driving range of the vehicle. Furthermore, an electric drive axle provides a greater flexibility in vehicle configurations, for example as a result of not having to consider the arrangement of a propeller shaft.

However, one of the challenges of electric drive axles is that the electric drive axle needs to have a compact design. Therefore, both the size of the transmission and the size of the electrical machine typically have to be reduced compared to in a powertrain having a central drive configuration. This in turn also affects for example the lubrication of the transmission assembly since less oil may be stored in the transmission assembly in view of the reduced size thereof. Lubrication is one of the most important factors for ensuring efficiency, proper functioning, and desired lifespan of a transmission assembly.

There are two main ways to effectuate lubrication of a constituent component in a transmission assembly. The first one is splash lubrication in which a rotating constituent component (such as a gear wheel) is dipped into the oil sump. As the constituent component rotates, it drags the oil from the oil sump and may also splash the oil to other parts of the transmission. The second one is spray or jet lubrication in which oil is sprayed, either as a spray or in the form of one or more jets, onto the constituent component using a nozzle or the like. Spray lubrication may also result in oil slashing within the transmission assembly, at least when used for lubrication of a rotating constituent component. The selection of method for lubrication of a certain constituent component of a transmission is dependent of the rotational speed of said constituent component. In general, spray lubrication is used at higher rotational speeds of a constituent component. However, for lower rotational speeds, splash lubrication is more appropriate. Therefore, the final gear wheel of a transmission assembly is typically lubricated by dipping into the oil sump.

The document US11519552B1 discusses a vehicle driveline component with a housing, a rotary power transmission system, a lubricant and a lubrication de-aerator. The transmission is configured to transmit rotary power to an output gear. A shroud can be disposed about the output gear to limit the amount of the lubricant in the sump that is able to come in contact with the output gear.

The document US11231103B2 discusses a lubricant supply for a vehicle powertrain. A lubricant supply point is arranged in a traction motor and a additional supply point is disposed in a traction transmission. The lubricant supply pints can be supplied with lubricant by way of a first lubricant volume flow.

### SUMMARY

The object of the present invention is to enable an energy efficient electric drive axle assembly.

The object is achieved by the subject-matter of the appended claims.

In accordance with the present invention, an electric drive axle assembly for a vehicle is provided.

The electric drive axle assembly comprises an electrical machine and a transmission assembly. The transmission assembly is configured to, when the electric drive assembly is arranged in a vehicle, transmit driving power from the electrical machine to at least one drive wheel of said vehicle via a drive shaft of the transmission assembly. The transmission assembly comprises a final gear wheel pair comprising a final gear wheel arranged on the drive shaft. The electric drive assembly also comprises a lubrication system comprising an oil sump, arranged in a lower portion of a housing of the transmission assembly, and a supply system configured to supply oil from the oil sump to one or more constituent components of the electric drive axle assembly. The lubrication system further comprises a reservoir arrangement arranged so as to enclose a lower portion of the final gear wheel.

There is always some critical flow level of oil in a transmission assembly of an electric drive axle assembly that cannot be exceeded without risking damaging ta least some part of the electric drive axle. This in turn means that there has to be a predetermined maximum level of oil in the oil sump which limits the possible total volume of oil within the lubrication system. Moreover, the oil level in the oil sump may vary for example due to operational conditions. Therefore, when using splash lubrication by dipping of the final gear wheel into the oil sump there may be a risk of insufficient lubrication and cooling in case the oil level is too low. Moreover, in case the oil level in the sump is high, there is a risk of unduly high energy losses resulting from oil-induced drag.

However, the reservoir arrangement according to the herein described electric drive axle assembly ensures that an appropriate amount of oil may be distributed to the final gear wheel to achieve an appropriate lubrication and/or cooling of the final gear wheel independently of the oil level of the sump. Moreover, the reservoir arrangement ensures that the level of the oil, into which the final gear wheel is dipped, is not too high. This in turn reduces the risk for oil-induced drag losses. Thereby, the energy efficiency of the lubrication system, and thus also the overall energy efficiency of the electric drive axle assembly, is improved compared to previously known electric drive axles where the final gear wheel is dipped into the oil sump.

The reservoir arrangement may also contribute to the possibility for an increased oil volume in the lubrication system of the electric drive axle assembly. Moreover, the reservoir arrangement may also be used for restricting the free oil volume in the oil sump to account for negative effects resulting from vehicle inclination movements.

The supply system may be configured to supply oil to a cooling system of the electrical machine, said cooling system comprising a return conduit configured to return oil from the cooling system of the electrical machine to the reservoir arrangement. Thereby, oil may reliably be supplied to the reservoir arrangement without any need for additional pump elements and/or additional pump work. This in turn further improves the energy efficiency of the electric drive axle assembly.

The reservoir arrangement may comprise at least one drainage opening configured to allow drainage of oil from the reservoir arrangement to the oil sump. Thereby, the oil drainage from the reservoir arrangement may be controlled by design parameters. Furthermore, this has the advantage of facilitating separation of air inclusions in the oil contained within the lubrication system. Moreover, the drainage opening facilitates removal of oil from the reservoir arrangement during service of the electric drive axle assembly.

The reservoir arrangement may comprise an upper rim encircling the lower portion of the final gear wheel, said upper rim being arranged above a predefined maximum oil level of the oil sump. Thereby, it is avoided that oil from the oil sump is flown over the upper rim into the reservoir arrangement when the oil level in the oil sump is high, which could otherwise risk increasing oil-induced drag losses.

The reservoir arrangement according to the invention comprises a first oil reservoir, arranged so as to enclose said lower portion of the final gear wheel, and a second oil reservoir configured to supply oil to the first oil reservoir. Thereby, the supply of oil to the first oil reservoir may be more easily controlled. Furthermore, the total oil volume within the lubrication system may be increased.

The second oil reservoir may be fluidly connected to the first oil reservoir via an aperture and/or channel arranged in a wall, preferably a bottom wall, of the second oil reservoir. This *inter alia* has the advantage that the flow of oil from the second oil reservoir to the first oil reservoir may be controlled by selection of appropriate design parameters of the aperture and/or channel. Furthermore, this avoids the need for any pump elements for the supply of oil to the first oil reservoir.

The second oil reservoir may be arranged above the first oil reservoir. Thereby, the second oil reservoir may be configured to supply oil to the first oil reservoir through utilization of gravitational forces.

The supply system may be configured to supply oil to at least one gear wheel, other than the final gear wheel of the transmission assembly. In such a case, the second oil reservoir may be arranged so as to collect at least a portion of the oil supplied to said at least one gear wheel. Thereby, oil may be supplied to the second oil reservoir without the need for any pump element or pump work therefore. Furthermore, when the second oil reservoir is arranged so as to collect oil splashing within the transmission assembly, the amount of oil that is directly splashed to the oil sump may be reduced. This leads to a reduced amount of air inclusions in the oil contained within the lubrication system.

As mentioned above, the reservoir arrangement may comprise at least one drainage opening configured to allow drainage of oil from the reservoir arrangement to the oil sump. More specifically, the first oil reservoir may comprise a first drainage opening configured to allow controlled drainage of oil from the first oil reservoir to the oil sump, and the second oil reservoir may comprise a second
drainage opening configured to allow controlled drainage of oil from the second oil reservoir to the oil sump. Thereby, the separation of air inclusions from the oil contained within the lubrication system may be further improved. Moreover, it ensures appropriate oil levels in the respective oil reservoirs of the reservoir arrangement. It also facilitates removal of oil from the reservoir arrangement during service of the electric drive axle assembly.

In addition to the drive shaft and the final gear wheel pair, the transmission assembly may further comprise:
- a main shaft arranged in parallel with the drive shaft;
- a lay shaft arranged in parallel with the main shaft and the drive shaft;
- a first gear wheel connected and rotationally locked to an output shaft of the electrical machine;
- a first gear wheel pair comprising a second gear wheel, rotationally locked to the layshaft, and a third gear wheel engaged with the second gear wheel, said third gear wheel arranged on and connectable to the main shaft;
- a second gear wheel pair comprising a fourth gear wheel, rotationally locked to the layshaft, and a fifth gear wheel engaged with the fourth gear wheel, said fifth gear wheel arranged on and connectable to the main shaft;

wherein the first gear wheel is engaged with the second gear wheel or the fourth gear wheel, and
the final gear wheel pair comprises a sixth gear wheel engaged with the final gear wheel, the sixth gear wheel being rotationally locked to the main shaft. Thereby, the transmission assembly may provide at least two selectable gear steps while still having a compact design.

The transmission assembly may optionally further comprise a planetary gear arranged on the main shaft between the first gear wheel pair and the final gear wheel pair. Thereby, further gear steps may be provided.

The second oil reservoir may be arranged between the final gear wheel and the electrical machine, and below the main shaft of the transmission assembly. This *inter alia* has the advantage of enabling the second oil reservoir to collect oil splashing within the transmission assembly. Moreover, the available space within the electric drive axle assembly may be efficiently used so as to allow the second oil reservoir to have a larger volume. A larger volume of the second oil reservoir enables a larger total volume of oil in the lubrication system.

The final gear wheel may be connected to the drive shaft via a differential. This is advantageous in case the transmission assembly is configured to transmit driving power from the electrical machine to two drive wheels of the vehicle, each of said drive wheels connected to a respective end of the drive shaft.

The present invention further provides a vehicle comprising the electric drive axle assembly described above. The vehicle may be a fully electric vehicle or a hybrid vehicle. Moreover, the vehicle may be a heavy vehicle, such as a truck or a bus, but is not limited thereto.

### BRIEF DESCRIPTION OF DRAWINGS

- Fig. 1: illustrates a side view of an example of a vehicle,
- Fig. 2: schematically illustrates a cross-sectional view of a first exemplifying not claimed embodiment of an electric drive axle assembly according to the present disclosure,
- Fig. 3: illustrates a perspective view of the reservoir arrangement according to the first exemplifying embodiment of the electric drive axle assembly,
- Fig. 4: schematically illustrates an unclaimed embodiment of the lubrication system of an electric drive axle assembly
- Fig. 5: schematically illustrates a cross-sectional view of a second exemplifying embodiment of an electric drive axle assembly according to the present invention,

- Fig. 6: illustrates a perspective view of the reservoir arrangement according to the second exemplifying embodiment of the electric drive axle assembly,
- Fig. 7: schematically illustrates a top view of a third exemplifying embodiment of an electric drive axle assembly according to the present invention.

### DETAILED DESCRIPTION

The invention will be described in more detail below with reference to exemplifying embodiments and the accompanying drawings. The invention is however not limited to the exemplifying embodiments discussed and/or shown in the drawings, but may be varied within the scope of the appended claims. Furthermore, the drawings shall not be considered drawn to scale as some features may be exaggerated in order to more clearly illustrate the invention or features thereof.

The term "spray lubrication" as used in the present disclosure is to be interpreted broadly and thus encompasses any form of lubrication in which the lubricant is in some way sprayed by means of one or more nozzles or the like. Thus, spray lubrication encompasses for example both oil-mist lubrication and oil-jet lubrication.

Moreover, in the present disclosure, the term "gear wheel pair" is used to describe a set of two gear wheels arranged so as to engage with each other. Moreover, when gear wheels are described herein as engaged, engaging or similar expressions, said gear wheels shall be considered to be intermeshing.

The herein described electrical drive axle assembly may be arranged in a vehicle at somewhat different rotational orientations relative to a longitudinal axis and a vertical axis of said vehicle. It should therefore be noted that any term describing a relative direction between different features of the herein described electric drive axle assembly, such as the terms "above", "below", "upper" or "lower", shall be seen in relation to a vertical direction of a vehicle in which the electric drive axle assembly is arranged, and assuming that said vehicle is resting on a horizontal ground surface.

The herein described electric drive axle assembly may constitute, or be part of, a powertrain of a vehicle. Furthermore, a vehicle may comprise only one, or more than one, of the herein described electric drive axle assembly without departing from the present disclosure. A vehicle comprising the herein described electric drive axle assembly may be a fully electric vehicle or may be a hybrid vehicle. The vehicle may be a heavy or medium land-based motor vehicle, such as a heavy-duty truck, a construction vehicle, a tractor, or a bus, but is not limited thereto. The vehicle may for example be a lighter land-based vehicle, such as a car or the like. The vehicle may be a vehicle configured to be partly or fully driven by a driver (said driver being present onboard the vehicle or remote from the vehicle), or be a fully autonomous vehicle.

In accordance with the present invention an electric drive axle assembly for a vehicle is provided. The electric drive axle assembly comprises at least one electrical machine and a transmission assembly. The transmission assembly is configured to, when the electric drive axle assembly is arranged in a vehicle, transmit driving power from the electrical machine to at least one drive wheel of the vehicle via a drive shaft of the transmission assembly. The transmission assembly comprises, in addition to the drive shaft, a final gear wheel pair comprising a final gear wheel arranged on the drive shaft. A final gear wheel pair shall here be considered to constitute the last gear wheel pair of the transmission assembly seen in the direction transfer of driving power from the electrical machine to the drive shaft. The electric drive axle assembly further comprises a lubrication system comprising an oil sump, arranged in a lower portion of a housing of the transmission assembly. The lubrication system further comprises a supply system configured to supply oil from the oil sump to one or more constituent components of the electric drive axle assembly. Said one or more constituent components of the electric drive axle assembly, to which the supply system is configured to supply oil, may alternatively be described as one or more oil consumers of the electric drive axle assembly.

The lubrication system of the electric drive axle assembly according to the present invention further comprises a reservoir arrangement arranged so as to enclose, i.e. surround, a lower portion of the final gear wheel. The reservoir arrangement is suitably arranged above the bottom of the oil sump. The reservoir arrangement is configured to store oil for the purpose of lubrication and/or cooling of the final gear wheel of the transmission assembly. Thus, in contrast to previously known electric drive axle assemblies, the final gear wheel of the herein described electric drive axle assembly is not arranged to be dipped into the oil present in the oil sump but into the oil stored by the reservoir arrangement. Thereby, an appropriate distribution of oil to the final gear wheel in order to achieve an appropriate lubrication and/or cooling of the final gear wheel while avoiding unduly high oil-induced drag losses may be achieved. The reservoir arrangement may also contribute to the possibility for an increased oil volume in the lubrication system of the electric drive axle assembly. Moreover, the reservoir arrangement may also be used for restricting the free oil volume in the oil sump to account for negative effects resulting from vehicle inclination movements.

The reservoir arrangement is suitably arranged on the return side of the lubrication system. Thereby, oil may be supplied to the reservoir arrangement without the need for any additional pump elements or pump work. This further improves the energy efficiency of the electric drive axle assembly. More specifically, the reservoir arrangement may be arranged, within the lubrication system, between an outlet of at least one oil consumer (i.e. a constituent component of the electric drive axle assembly to which the supply system is configured to supply oil from the oil sump) and the oil sump.

Furthermore, the reservoir arrangement may also contribute to separate air inclusions from the oil contained within the lubrication system. By having a controlled oil flow from the reservoir arrangement to the oil sump, it is much easier to separate air inclusions from the oil compared to if oil is splashed directly to the oil sump. A reservoir arrangement arranged on the return side within the lubrication system may also reduce the amount of oil which is splashed directly to the oil sump. Reducing the amount of air inclusions may further improve the energy efficiency of the electric drive axle assembly as well as reduce the risk of insufficient or uneven lubrication, which in turn could lead to a shortening of the lifetime of the transmission assembly of the electric drive axle assembly.

The reservoir arrangement may consist of a single (first) oil reservoir and optionally a coupling device. Alternatively, the reservoir arrangement may comprise, or consist of, a first oil reservoir, a second oil reservoir and optionally a coupling device. Irrespectively of whether the reservoir arrangement comprises only one oil reservoir or two oil reservoirs, the above mentioned coupling device may be configured for fluidly connecting a return conduit of an oil consumer of the electric drive axle assembly to the reservoir arrangement. Moreover, irrespectively of whether the reservoir arrangement comprises only one first oil reservoir or two oil reservoirs, the first oil reservoir of the reservoir arrangement is arranged so as to enclose the lower portion of the final gear wheel. The first oil reservoir may be described as an open container arranged to surround a lower portion of the final gear wheel.

The second oil reservoir, if present, is configured to supply oil to the first oil reservoir. More specifically, the second oil reservoir is configured to supply oil to the first oil reservoir passively, i.e. without any need for pump work for transferring oil from the second oil reservoir to the first oil reservoir. The second oil reservoir may suitably be arranged above the first oil reservoir. Moreover, the second oil reservoir may be fluidly connected to the first oil reservoir via an aperture and/or channel arranged in a wall of the second oil reservoir. This has the advantage of allowing control of the flow of oil from the first oil reservoir to the second oil reservoir by selection of design parameters of the aperture and/or channel. Suitably, said aperture and/or channel may be arranged in a bottom wall of the second oil reservoir. In view of the fact that the primary purpose of the second oil reservoir is to supply oil to the first oil reservoir, there is no need for the final gear wheel to extend into the second oil reservoir. Therefore, the second oil reservoir may be arranged alongside the final gear wheel of the transmission assembly.

The first oil reservoir comprises an upper rim encircling the final gear wheel. Said upper rim is suitably arranged above a predefined maximum oil level of the oil sump. Thereby, it is avoided that oil present in the oil sump is flown directly into the first oil reservoir when the oil level in the oil sump is high. This further improves the control of amount of oil stored in the first oil reservoir. It should however be noted that the first oil reservoir is open at the top and that oil thereby may flow from the first oil reservoir, over the upper rim thereof, into the oil sump.

The first oil reservoir and the second oil reservoir may be integrally formed into a single body, or may be separate bodies arranged to be in contact with each other. The first oil reservoir and the second oil reservoir may for example be mounted or otherwise attached to each other. Alternatively, albeit less preferred in view of the limited available free space within the electric drive axle assembly, the second oil reservoir may be arranged at a distance from the first oil reservoir.

As previously mentioned, the electric drive axle assembly according to the present invention comprises a transmission assembly. Said transmission assembly may have various configurations as long as it comprises the drive shaft and the final gear wheel pair described above. For example, the transmission assembly may further comprise:
- a main shaft arranged in parallel with the drive shaft;
- a lay shaft arranged in parallel with the main shaft and the drive shaft;
- a first gear wheel connected and rotationally locked to an output shaft of the electrical machine;
- a first gear wheel pair comprising a second gear wheel, rotationally locked to the layshaft, and a third gear wheel engaged with the second gear wheel, said third gear wheel arranged on and connectable to the main shaft;
- a second gear wheel pair comprising a fourth gear wheel, rotationally locked to the layshaft, and a fifth gear wheel engaged with the fourth gear wheel, said fifth gear wheel arranged on and connectable to the main shaft;

wherein the first gear wheel is engaged with the second gear wheel or the fourth gear wheel, and
the final gear wheel pair (in addition to the final gear wheel) comprises a sixth gear wheel engaged with the final gear wheel, the sixth gear wheel being rotationally locked to the main shaft. The transmission assembly may optionally further comprise a planetary gear arranged on the main shaft between the first gear wheel pair and the final gear wheel pair. In such a case, the main shaft comprises a first main shaft half-shaft and a second main shaft half-shaft, each connected to a respective constituent component of the planetary gear.

Moreover, at least in case the transmission assembly is configured to transmit driving power from the electrical machine to two drive wheels of the vehicle, the final gear wheel of the transmission assembly may be connected to the drive shaft via a differential. In such a case, the drive shaft may comprise a first drive shaft half-shaft and a second drive shaft half-shaft. The two drive wheels of the vehicle may each be connected to one of said first and second drive shaft half-shafts.

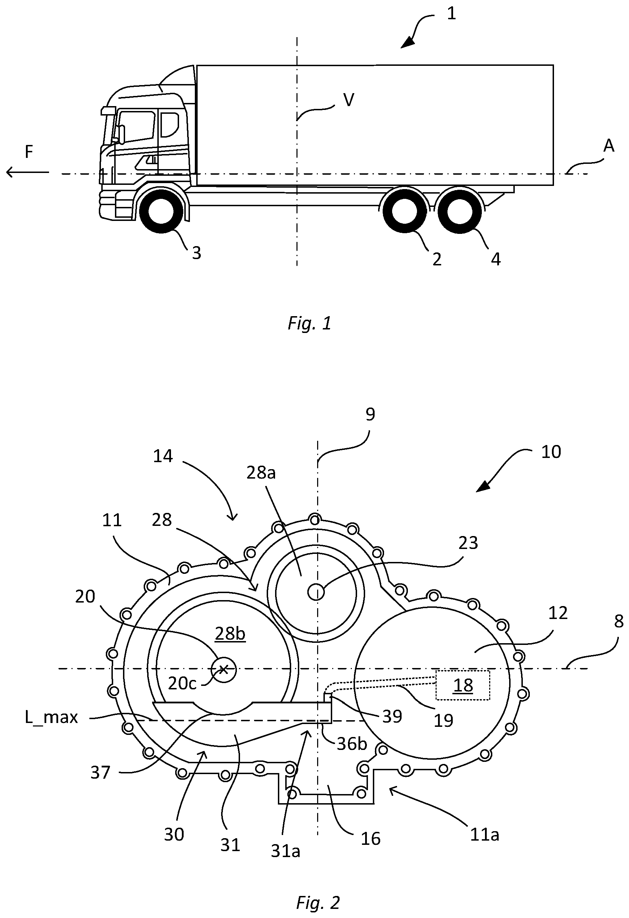

Figure 1 illustrates a side view of an example of a vehicle 1, here illustrated as a truck. The vehicle 1 may be a fully electric vehicle or a hybrid vehicle. The vehicle 1 comprises a powertrain which may constitute or at least comprise the herein described electric drive axle assembly. It should here be noted that the vehicle 1 may also comprise more than one of the herein described electric drive axle assembly.

The vehicle 1 has a longitudinal axis A. The longitudinal axis A of the vehicle 1 is parallel to a forward moving direction as well as parallel to a reverse moving direction of the vehicle 1. The forward moving direction of the vehicle 1 is in the figure illustrated by the arrow F. Moreover, the vehicle 1 also has a vertical axis V which is perpendicular to the longitudinal axis A. In case the vehicle is present on a flat ground surface, the vertical axis V is substantially perpendicular to said flat ground surface whereas the longitudinal axis A is substantially parallel to the flat ground surface. The vehicle 1 further has a transverse axis (not shown) perpendicular to both the longitudinal axis A and the vertical axis V.

The vehicle 1 comprises a plurality of ground engaging wheels including drive wheels 2 and front wheels 3. The front wheels 3 are typically non-driven wheels, but may also constitute drive wheels, if desired. Furthermore, the front wheels 3 may typically be steered wheels. The vehicle 1 may optionally further comprise tag axle wheels 4, if desired. Said tag axle wheels may be associated with a raisable tag axle such that they may be temporarily moved from a ground engaging position to a position where they are lifted from the ground. The tag axle wheels 4 may be steered, or non-steered, tag axle wheels.

The vehicle 1 may be an electrical vehicle or a hybrid vehicle. Moreover, the vehicle 1 may be a heavy vehicle, such as a bus or a truck, but is not limited thereto. Moreover, the vehicle 1 may be a vehicle configured to be operated, either partly or fully, by a driver. Such a driver may be present onboard the vehicle or be remote from the vehicle, for example at a remote control center or the like. Alternatively, the vehicle 1 may be a fully autonomous vehicle.

Figure 2 schematically illustrates a cross sectional view of a first exemplifying not claimed embodiment of an electric drive axle assembly 10 according to the present disclosure. The electric drive axle assembly 10 has a first axis 8, a second axis 9 and a third axis (not shown), each of said axes being perpendicular to the other two axes. The third axis is parallel to a longitudinal axis 20c of a drive shaft 20 (as will be further described below) of the electric drive axle assembly 10.

When the electric drive axle assembly 10 is arranged in a vehicle, such as the vehicle 1 shown in Figure 1, the drive shaft 20 is typically arranged so that the longitudinal axis 20c thereof extends perpendicular to the longitudinal axis A and perpendicular to the vertical axis V of the vehicle 1. In other words, the third axis of the electric drive axle assembly 10 will, when the electric drive axle assembly is arranged in a vehicle, be substantially parallel to the transverse axis of the vehicle. Furthermore, the electric drive axle assembly 10 may be arranged in the vehicle 1 such that the first axis 8 is substantially parallel to the longitudinal axis A of the vehicle and the second axis 9 thus is substantially parallel to the vertical axis V of the vehicle. It is however also possible that the electric drive axle assembly 10 is arranged in the vehicle 1 such that the first axis 8 is oriented at an angle, such as rotated at an angle of up to ±15° or up to ±30°, relative to the longitudinal axis A of the vehicle 1, if desired. In such a case, the second axis 9 of the electric drive axle assembly 10 would naturally also be rotated relative to the vertical axis V of the vehicle 1 with the corresponding angle. The reason for arranging the electric drive axle assembly 10 in the vehicle 1 such that the first axis 8 and the second axis 9, respectively, are rotated relative to the longitudinal axis A and the vertical axis V of the vehicle 1 may for example be to better fit into the available space dependent of the configuration of the vehicle 1.

The electric drive axle assembly 10 comprises an electrical machine 12 and a transmission assembly 14. The details of the electrical machine 12 are not limiting to the electric drive axle assembly according to the present disclosure and are therefore not illustrated in the figure or further described herein. In Figure 2, the electrical machine 12 is intended to be shown to be arranged in parallel with the drive shaft 20 of the transmission assembly 14, which also means that an output shaft of the electrical machine is arranged substantially parallel to the drive shaft 20. The electrical machine 12 may however alternatively be arranged so that the output shaft of the electrical machine is substantially perpendicular to the longitudinal extension of the drive shaft 20, if desired.

The transmission assembly 14 of the electric drive axle assembly 10 is arranged in a housing 11 and comprises a drive shaft 20 which extends out of the housing 11. Moreover, the electrical machine 12 is arranged in a casing (not shown) that may be arranged inside the housing 11 as shown in the figure, or may be arranged outside of the housing 11. If arranged outside of the housing 11, the casing of the electrical machine 12 may suitably be mounted or otherwise attached to the housing 11 of the transmission assembly 14.

The transmission assembly 14 is configured to, when the electric drive axle assembly 10 is arranged in a vehicle 1, transmit driving power from the electrical machine 12 to at least one drive wheel 2 (shown in Figure 1) of said vehicle via the drive shaft 20 of the transmission assembly 14. Thus, the drive shaft 20 is configured to be connected to at least one drive wheel of the vehicle when the electric drive axle assembly 10 is installed in a vehicle.

The transmission assembly 14 comprises a final gear wheel pair 28. Said final gear wheel pair 28 comprises a final gear wheel 28b arranged on the drive shaft 20 and engaged with another gear wheel 28a (also denominated sixth gear wheel herein) that is arranged on a main shaft 23 of the transmission assembly 14. The gear wheel 28a may be rotationally locked to the main shaft 23. The final gear wheel 28b may be rotationally locked to the drive shaft 20 or be connected to the drive shaft 20 via a differential (not shown).

The electric drive axle assembly 10 further comprises an oil sump 16 formed at a lower portion 11a (i.e. bottom portion) of the housing 11. The oil sump 16 is part of a lubrication system of the electric drive axle assembly 10, and is configured to store oil up to a predefined maximum oil level L_max. The maximum oil level L_max is in the figure shown as parallel to the first axis 8 of the electric drive assembly 10. It should however be noted that this would only be the case when the electric drive axle assembly 10 is arranged, and oriented, in a vehicle so that the first axis 8 is parallel to the longitudinal axis A of the vehicle.

Oil may be supplied from the oil sump 16 to one or more constituent components of the electric drive axle assembly 10, for the purpose of lubrication and/or cooling thereof, by means of a supply system (not shown) and thereafter returned to the oil sump 16. For example, the supply system may be configured to supply oil to a cooling system of the electrical machine 12. Such a cooling system is, for ease of illustration, schematically represented in the figure by the dotted box 18. The supply system may alternatively, or additionally, be configured to supply oil to at least one spray device (not shown) configured to spray oil towards a constituent component of the transmission assembly for the purpose of lubrication and/or cooling thereof.

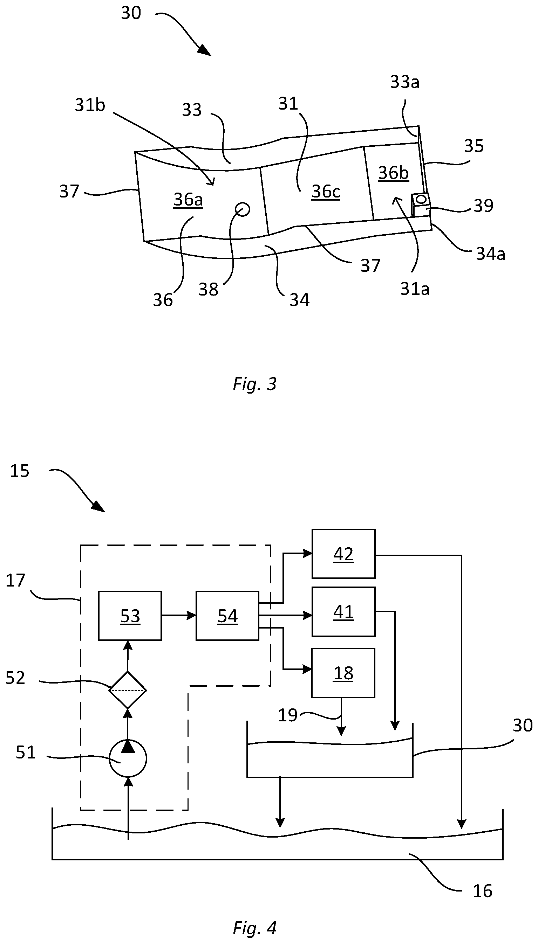

The electric drive axle assembly 10 further comprises a reservoir arrangement 30, which will be described in more detail below with reference to Figure 3. The reservoir arrangement 30 is a part of the lubrication system, and is configured to store oil for the purpose of lubrication (and typically also cooling) of the final gear wheel 28b through dipping of said final gear wheel 28b therein. Therefore, the reservoir arrangement 30 is open at the top and arranged so as to enclose a lower portion of the final gear wheel 28b. Moreover, the reservoir arrangement 30 comprises an upper rim 37 which is arranged above the maximum oil level L_max. In other words, the reservoir arrangement 30 is arranged above the lower portion 11a of the housing 11 and at a height such the oil stored in the oil sump 16 should not be able to flow over the upper rim 37 into the reservoir arrangement 30. This allows control of the oil level in the reservoir arrangement 30 to ensure appropriate lubrication of the final gear wheel 28b while reducing oil-induced drag losses associated with the lubrication of the final gear wheel 28b. The reservoir arrangement 30 may however be arranged so as to partly extend down below the maximum oil level L_max, as shown in the figure.

Furthermore, the reservoir arrangement 30 is arranged on the return side of the lubrication system of the electric drive axle assembly 10. The term "return side" shall here be seen in the direction of transfer of oil within the lubrication system starting from the oil sump, said oil thereafter passing via various constituent components of the electric drive axle assembly that may consume oil and ultimately returning to the oil sump 16. In other words, the reservoir arrangement 30 is, within the lubrication system 15, arranged after one or more oil consumers of the electric drive axle assembly 10. The fact that the reservoir arrangement 30 is arranged on the return side of the lubrication system means that oil is supplied to the reservoir arrangement 30 without the need for any additional pump elements or pump work other than already available in terms of the supply system of the lubrication system. For example, oil returning from a cooling system 18 of the electrical machine 12 may be supplied to the reservoir arrangement 30 via a return conduit 19 of the cooling system 18 without the need of a separate pump element therefore.

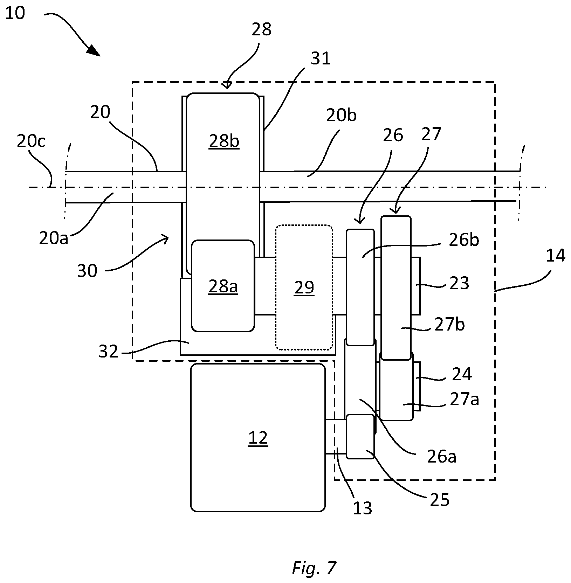

As previously mentioned, Figure 2 represents a cross-sectional view of the first exemplifying not claimed embodiment of the herein described electric drive axle assembly according to the present disclosure, Therefore, all parts of the transmission assembly 14 are therefore not seen in the figure. Various configurations of the transmission assembly 14 are plausible as long as it is configured to transmit power from the electrical machine to the drive shaft and comprises a final gear wheel pair arranged on the drive shaft. For example, the transmission assembly 14 may have a configuration corresponding to the configuration described below with reference to Figure 7.

Figure 3 illustrates a perspective view of the reservoir arrangement 30 according to the first exemplifying embodiment described above and illustrated in Figure 2. The reservoir arrangement 30 comprises a first oil reservoir 31 which is open at the top to allow the final gear wheel 28b to partly extend down into said first oil reservoir 31. More specifically, the first oil reservoir 31 is configured to enclose a lower portion of the final gear wheel 28b. The first oil reservoir 31 may be considered to comprise an oil receiving portion 31a configured to collect and/or receive oil. As can be seen in Figure 2, the oil receiving portion 31a may be arranged to extend into a space between the final gear wheel 28b and the electrical machine 12, suitably below at least a part of the gear wheel 28a of the final gear wheel pair 28 that is arranged on the main shaft 23. In other words, the oil receiving portion 31a of the first oil reservoir 31 may be arranged to the side of the final gear wheel 28b, as seen in a radial direction of the final gear wheel 28b. The first oil reservoir 31 may further be considered to comprise an oil storing portion 31b configured to surround the lower portion of the final gear wheel 28b, thus substantially enclosing said lower portion of the final gear wheel 28b. The oil receiving portion 31a and oil storing portion 31b together forms the open volume of the first oil reservoir 31.

The first oil reservoir 31 comprises a first sidewall 33, a second side wall 34, a third side wall 35, and a bottom wall 36 together forming a container having a continuous upper rim 37 at the top end. Said upper rim 37 is configured to encircle the final gear wheel 28b, more specifically encircle a lower portion of the final gear wheel 28b as shown in Figure 2. The first and second sidewalls 33, 34 are configured to extend on opposite sides of the final gear wheel 28b, i.e. on opposite sides of a plane of rotation of the final gear wheel 28b. The first and second sidewalls 33, 34 may be arranged substantially in parallel, or slightly inclined relative each other so as to narrowing the cross-sectional area of the container downwards. The first and second side walls 33, 34 are, at a respective first end 33a, 34a thereof, connected by the third side wall 35. In case the third side wall 35 is a substantially flat side wall (i.e. non-curved or not stepped side wall) as shown in the figure, the third side wall 35 may for example be arranged to extend substantially perpendicular to the first and second side walls 33, 34. The first and second side walls 33, 34 are further connected by the bottom wall 36.

The bottom wall 36 may suitably comprise a curved bottom wall portion 36a extending at least from the bottom of the reservoir arrangement 30 up to the upper rim 37. The curved bottom wall portion 36a may have a curvature such that it substantially conforms to the circumference of the final gear wheel 28b along the extension of the curved bottom wall portion 36a, but naturally have a greater radius than the radius of circumference of the final gear wheel 28b such that there is a gap therebetween.

The bottom wall 36 may further comprise a substantially flat bottom wall portion 36b. Said substantially flat bottom wall portion 36b may, together with the third side wall 35 and parts of the first and second side walls 33, 34, form the oil receiving portion 31a of the first oil reservoir 31. Thus, the substantially flat bottom wall portion 36b may suitably be configured to be arranged next to the final gear wheel 28b such that it is not arranged below the final gear wheel 28b. Furthermore, the substantially flat bottom wall portion 36b may, when the electric drive assembly 10 is arranged in a vehicle, suitably be arranged to extend in a plane substantially parallel to the longitudinal axis A of the vehicle, said plane being above the bottom of the reservoir arrangement 30, preferably above a lowest point of the circumference of the final gear wheel 28b. Moreover, the flat bottom wall portion 36b may be configured to extend in a plane parallel to, and below, a plane of the longitudinal axis 20c of the drive shaft 20.

The curved bottom wall portion 36a may be directly connected to the flat bottom wall portion 36b, if desired. Alternatively, the curved bottom wall portion 36a may, as shown in Figure 3, be connected via an intermediate bottom wall portion 36c of the bottom wall 36 to the flat bottom wall portion 36b. The intermediate bottom wall portion 36c may for example be arranged to extend in a plane inclined relative to the plane of the flat bottom wall portion 36b to thereby allow oil to flow from oil receiving portion 31a of the first oil reservoir 31 (i.e. the portion of the first oil reservoir 31 at which the flat bottom wall 36b is arranged) to the bottom of the first oil reservoir 31.

The reservoir arrangement 30 may further comprise a first drainage opening 38 configured to allow a controlled drainage of oil from the reservoir arrangement 30 to the oil sump 16. The first drainage opening 38 may be arranged in the bottom wall 36 of the first oil reservoir 31, although the present disclosure is not limited thereto. Suitably, the first drainage opening 38 may be arranged at the lowest point of the bottom wall 36, i.e. at the bottom of the first oil reservoir 31, as shown in Figure 3. Alternatively, the first drainage opening 38 may be arranged in any one of the side walls 33, 34, if desired.

The flow of oil from the reservoir arrangement 30 to the oil sump 16 may be controlled by appropriately selecting the shape and size of said first drainage opening 38. Also, the position of the first drainage opening may to some extent affect the flow of oil from the reservoir arrangement 30 to the oil sump 16. Although a potentially excessive amount of oil in the reservoir arrangement 30 can flow over the upper rim 37 and thereby be returned to the oil sump 16, the first drainage opening 38 serves the purpose of further controlling the amount of oil stored in the reservoir arrangement to ensure appropriate lubrication of the final gear wheel 28b with reduced oil-induced drag losses. The first drainage opening 38 further serves the purpose of facilitating emptying the lubrication system of oil during for example service of the electric drive axle assembly 10 without requiring disassembly thereof. Therefore, the first drainage opening 38 is may suitably be arranged at the bottom of the first oil reservoir 31 as mentioned above.

The reservoir arrangement 30 is, as previously mentioned, suitably configured to be supplied with oil without any specifically designated pump element or work therefore. For example, oil may be supplied to the reservoir arrangement via a return conduit 19 of a cooling system 18 of the electrical machine 12 as schematically shown in Figure 2. For said purpose, the reservoir arrangement 30 may further comprise a coupling device 39 configured to allow such a return conduit 19 to be fluidly connected to the reservoir arrangement 30 for the purpose of supplying oil thereto. Moreover, the reservoir arrangement 30 may be configured to collect oil splashing within the transmission assembly 14 in view of the configuration and arrangement of the oil receiving portion 31a described above.

Figure 4 schematically illustrates an unclaimed embodiment of the lubrication system 15 of an electric drive axle assembly 10, including (but not limited to) the first exemplifying embodiment described above. The lubrication system 15 comprises an oil sump 16, a reservoir arrangement 30 and a supply system 17. The supply system 17 is configured to supply oil from the oil sump 16 to one or more constituent components of the electric drive axle assembly, such as a cooling system 18 of the electrical machine 12, a first spray device 41 and/or a second spray device 42. Each of the first and second spray devices 41, 42 may be configured to spray oil to a respective gear wheel of the transmission assembly 14.

The supply system 17 may comprise a pump 51 configured to pump oil from the oil sump 16, via a filter 52 and a heat exchanger 53, to a distribution device 54. The pump 51 may be a mechanical pump, for example connected to one of the shafts of the transmission assembly 14 to be driven thereby, or an electrical pump. If desired, the supply system 17 may comprise more than one pump. The filter 52 may be configured to filter out particulate matter from the oil passing therethrough. The heat exchanger 53 may be configured to cool the oil passing therethrough. The distribution device 54 may be configured to distribute oil to the one or more constituent components of the transmission assembly 14, and may for example be a flow divider. It should here be noted that in case the supply system 17 would be configured to supply oil to only one constituent component of the transmission assembly 14, the distribution device 54 may naturally be omitted.

Returning oil from the cooling system 18 of the electrical machine 12 may be transferred via a return conduit 19 to the reservoir arrangement 30. Furthermore, oil having been sprayed by the first spray device 41 may, after having passed the relevant component(s) of the transmission assembly 14, also, at least partly, be collected in the reservoir arrangement 30 as shown in the figure. The first spray device 41 may for example be configured to spray oil towards a constituent component of the transmission assembly that is connected to the main shaft 23, such as the gear wheel 28a of the final gear wheel pair 28. In contrast, oil having been supplied by the second spray device 42 may be configured to return directly to the oil sump 16 without passing the reservoir arrangement 30. Furthermore, any excessive oil stored in the reservoir arrangement 30 may be returned to the oil sump 16, for example via a first drainage opening 38 as described above with reference to Figure 3. As shown in the figure, there is no dedicated pump or the like configured to directly transfer oil from the oil sump 16 to the reservoir arrangement 30. Instead, the reservoir arrangement 30 may be considered to be arranged on the return side of the lubrication system 15. This leads to an energy efficient lubrication of the final gear wheel 28b since no extra pump elements or pump work is necessary in order to supply oil to the reservoir arrangement 30 at the same time as the reservoir arrangement 30 provides a controlled volume, essentially independent of the operating condition of the electric drive axle assembly, of oil into which the final gear wheel 28b is dipped. Said controlled volume of oil reduces the oil-induced drag losses and thereby the energy efficiency of the electric drive axle assembly 10.

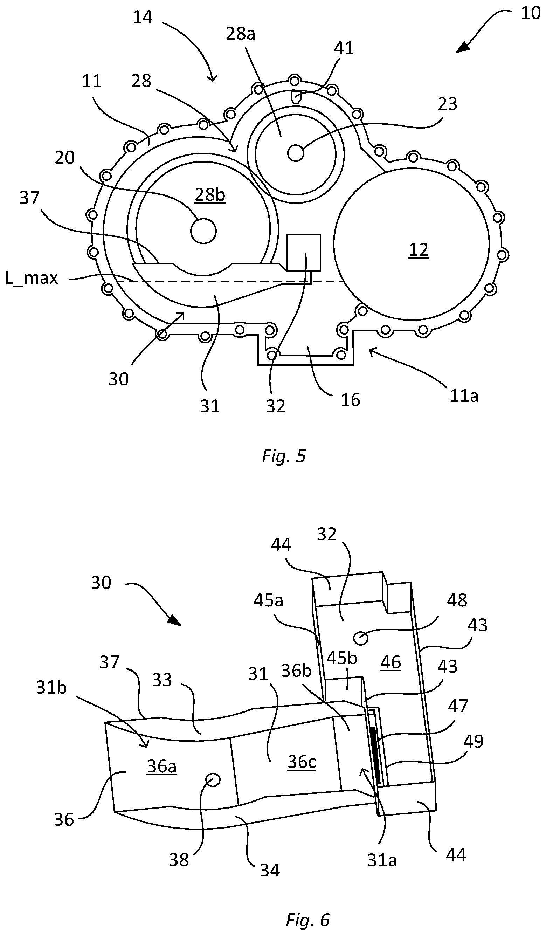

Figure 5 schematically illustrates a cross sectional view of a second exemplifying embodiment of an electric drive axle assembly 10 according to the present invention. The second exemplifying embodiment essentially corresponds to the first exemplifying embodiment described above, and shown in Figure 2, except that the reservoir arrangement 30 comprises both a first oil reservoir 31 and a second oil reservoir 32.

Like in above described first exemplifying embodiment of the electric drive axle assembly 10, the first oil reservoir 31 of the reservoir arrangement 30 is arranged so as to enclose a lower portion of the final gear wheel 28b. Moreover, the upper rim 37 of the first oil reservoir 31 is arranged above the maximum oil level L_max.

The second oil reservoir 32 of the reservoir arrangement 30 is configured to receive and/or collect oil, and may thus serve the same purpose as the oil receiving portion 31a of the reservoir arrangement 30 according to the first exemplifying embodiment described above. The second oil reservoir 32 is further configured to supply oil to the first oil reservoir 31, and is thus fluidly connected to the first oil reservoir 31. The second oil reservoir 32 may further serve the purpose of providing an additional volume for storage of oil. Thus, the second oil reservoir arrangement 32 has the advantage of enabling accommodating a greater volume of oil in the lubrication system of the electric drive axle assembly 10. This is especially advantageous in view of the fact of the compact configuration of the electric drive axle assembly 10 which limits the possible oil volume in the oil sump 16. The reservoir arrangement 30 according to the second exemplifying embodiment will be further described below with reference to Figure 6.

The second oil reservoir 32 may suitably be arranged above the first oil reservoir 31, as shown in the figure. Furthermore, the second oil reservoir 32 may be arranged below the main shaft 23 of the transmission assembly 14, and between the final gear wheel 28b and the electrical machine 12 as seen in a cross sectional view of the electric drive axle assembly 10 perpendicular to the longitudinal axis 20c of the drive shaft 20 (i.e. a cross sectional view as shown in Figure 5).

Moreover, as shown in the figure, the electric drive axle assembly 10 may also comprise a first spray device 41 configured to spray oil towards the gear wheel 28a of the final gear wheel pair 28. The first spray device 41 is in the figure shown to be arranged above the gear wheel 28a. It should however be noted that the first spray device 41 may be arranged at any position around the circumference of the gear wheel 28a.

The electric drive axle assembly 10 according to the second exemplifying embodiment may further comprise the exemplified lubrication system 15 described above with reference to Figure 4. In such a case the reservoir arrangement 30 naturally comprises the first oil reservoir 31 as well as the second oil reservoir 32. Furthermore, the return conduit 19 from the cooling system 18 of the electrical machine 12 may suitably be configured to supply oil to the second oil reservoir 32 instead of to the first oil reservoir 31. For such a purpose, the reservoir arrangement 30 according to the second exemplifying embodiment may further comprise a coupling device configured to allow such a return conduit 19 to be fluidly connected to the second oil reservoir 32 of the reservoir arrangement 30, in the same manner as the coupling device 39 shown in Figure 3.

Figure 6 illustrates a perspective view of the reservoir arrangement 30 according to the second exemplifying embodiment of the electric drive axle assembly 10 described above and illustrated in Figure 5. As previously mentioned, the reservoir arrangement 30 comprises a first oil reservoir 31 and a second oil reservoir 32. Both of said first oil reservoir 31 and said second oil reservoir 32 are open at the top.

The first oil reservoir 31 may have essentially the same configuration as described above with reference to Figure 3. Thus, the first oil reservoir 31 comprises a first side wall 33, a second side wall 34, a third side wall 35 (not visible in the figure) and a bottom wall 36, together forming a container having an upper rim 37 at the top end. The first and second side walls 33, 34 are configured to extend on opposite sides of the final gear wheel 28b. Described differently, the first and second side walls 33, 34 are configured to be arranged on opposite sides of a plane of rotation of the final gear wheel 28b. The bottom wall may suitably comprise a curved bottom wall portion 36a extending at least from the bottom of the first oil reservoir 31 up to the upper rim 37. The bottom wall 36 may further comprise a flat bottom wall portion 36b and optionally an intermediate bottom wall portion 36c as described above with reference to Figure 3. The first oil reservoir 31 may further comprise a first drainage opening 38 configured to allow a controlled drainage of oil from the first oil reservoir 31 to the oil sump 16. Furthermore, the first oil reservoir 31 may, at the oil receiving portion 31a thereof, be adapted for connection and/or mounting of the second oil reservoir 32 to the first oil reservoir 31, if desired.

The second oil reservoir 32 comprises a bottom wall 46. Said bottom wall 46 may be a substantially flat bottom wall and optionally be arranged substantially parallel to the flat bottom wall portion 36b of the first oil reservoir 31. Furthermore, the second oil reservoir 32 may comprise two substantially parallelly arranged first side walls 43. The first side walls 43 may each be configured to extend in a plane substantially perpendicular to a plane of rotation of the final gear wheel 28b. The second oil reservoir 32 may further comprise two substantially parallelly arranged second side walls 44. The second side walls 44 may each be configured to extend in a plane substantially parallel to a plane of rotation of the final gear wheel 28b. In its simplest form, the second oil reservoir 32 may have a substantially rectangular configuration. However, depending on the available space inside the electric drive axle assembly, the second oil reservoir 32 may comprise further side walls for the purpose of increasing the internal volume of the second oil reservoir 32. The second oil reservoir 32 may for example comprise a third side wall 45a and a fourth side wall 45b as shown in the figure.

The second oil reservoir 32 is configured to supply oil to the first oil reservoir 31 and is thus fluidly connected thereto. In the reservoir arrangement 30 shown in Figure 5, the second oil reservoir 32 comprises an elongated aperture 47 arranged in the bottom wall 46 for this purpose. In other words, the shown second oil reservoir 32 is configured to supply oil to the first oil reservoir 31 via the elongated aperture 47 arranged in the bottom wall 46. It should here be noted that the second oil reservoir may be fluidly connected to the first oil reservoir through an aperture having another shape and/or via a channel. Furthermore, the aperture and/or channel need not necessarily be arranged in the bottom wall 46, but could for example be arranged the side wall of the first side wall which is closest to the first oil reservoir 31. The flow of oil from the second oil reservoir 32 to the first oil reservoir 31 may be controlled by appropriately selecting the geometrical configuration, size and position of the aperture and/or channel fluidly connecting the second oil reservoir 32 to the first oil reservoir 31.

The reservoir arrangement 30 according to the second exemplifying embodiment may suitably, in addition to the first drainage opening 38, also comprise a second drainage opening 48 configured to allow controlled drainage of oil from the reservoir arrangement. More specifically, the second drainage opening 48 may be configured to allow controlled drainage of oil from the second oil reservoir 32 to the oil sump 16. The second drainage opening 48 may for example be arranged in the bottom wall 46 of the second oil reservoir 32. The flow of oil from the second oil reservoir 32 to the oil sump may be controlled by appropriately selecting the shape and size of the second drainage opening 32, in the same way as described above with regard to the first drainage opening.

The second oil reservoir 32 may further comprise an internal partition wall 49, if desired. The internal partition wall may be arranged in the vicinity of the aperture 47 and/or channel and extend upwards from the bottom wall 46 of the second oil reservoir 32. However, the height of the internal partition wall 49 is less than the height of the side walls of the second oil reservoir 32. The height of the internal partition wall may for example be 10-50% or 10-30% of the height of the side walls of the second oil reservoir 32. The internal partition wall 49 may for example be substantially U-shaped or substantially L-shaped as seen in a cross-sectional plane parallel to the bottom wall 46 of the second oil reservoir 32. The internal partition wall 49 serves the purpose of enabling to store more oil in the second oil reservoir 32 before oil starts to flow to the first oil reservoir 31 via the aperture 47 and/or channel. Thus, the internal partition wall 49 may be configured to divide the internal volume of the second oil reservoir, into two separate compartments at a bottom portion of the second oil reservoir 32. This may for example enable a lower oil level in the oil sump, achieved by storing the oil in the second oil reservoir 32, also in situations where there might be a lower need for lubrication and/or cooling of the final gear wheel and thereby a possibility for a lower level of oil in the first oil reservoir 31.

Albeit not shown in Figure 6, the reservoir arrangement 30 may further comprise a coupling device 39 as described above with reference to Figure 3. If so, the coupling device 39 may suitably be configured to fluidly connect the return circuit 19 of the cooling system 18 of the electrical machine 12 to the second oil reservoir 32. In other words, the coupling device 39 may be arranged at the second oil reservoir 32 instead of at the first oil reservoir 31.

Figure 7 schematically illustrates a top view of a third exemplifying embodiment of an electric drive axle assembly 10 according to the present invention. Like the first and second exemplifying embodiments of the electric drive assembly described above, the electric drive axle assembly 10 according to the third exemplifying embodiment comprises an electrical machine 12, a transmission assembly 14 and a lubrication system. For sake of ease of illustration, only the reservoir arrangement 30 of the lubrication system is shown in Figure 7. Moreover, depending on the specific configuration of the transmission assembly 14, the third exemplifying embodiment may correspond to, or be different from, the second exemplifying embodiment of the electric drive axle assembly described above.

The transmission assembly 14 comprises a drive shaft 20, a main shaft 23 and a layshaft 24. The drive shaft 20, the main shaft 23 and the lay shaft 24 are each arranged in parallel to each other. The transmission assembly 14 further comprises a first gear wheel pair 26, a second gear wheel pair 27 and a final gear wheel pair 28. The transmission assembly 14 is connected to an output shaft 13 of the electrical machine via a first gear wheel 25 arranged on said the output shaft 13. More specifically, the first gear wheel 25 is rotationally locked to the output shaft 13 of the electrical machine 12. In other words, the first gear wheel 25 is fixedly connected to the output shaft 13 of the electrical machine 12 and will therefore rotate with the same rotational speed as the output shaft 13. The first gear wheel 25 may, as shown in the figure, be connected to the first gear wheel pair 26 by being arranged to engage with one of the gear wheels of the first gear wheel pair 26. Alternatively, the first gear wheel 25 may be connected to the second gear wheel pair 27, if desired, by engaging with one of the gear wheels of the second gear wheel pair 27.

The first gear wheel pair 26 comprises a second gear wheel 26a and a third gear wheel 26b engaged with each other. The second gear wheel 26a is arranged on the lay shaft 24. More specifically, the second gear wheel 26a is rotationally locked to the lay shaft 24. In other words, the second gear wheel 26a is fixedly connected to the lay shaft 24. The third gear wheel 26b is arranged on, and connectable to, the main shaft 23. More specifically, the third gear wheel 26b is selectively rotationally coupled to the main shaft 23. In other words, when the third gear wheel 26b is rotationally coupled to the main shaft 23, the third gear wheel 26b is rotationally locked to the main shaft 23 and the main shaft 23 and the third gear wheel 26b will thereby rotate with the same rotational speed. The connection of the third gear wheel 26b to the main shaft 23 to rotationally lock the third gear wheel thereto may be made by any previously known means therefore, such as by means of a coupling sleeve or the like. When the third gear wheel 26b is not rotationally coupled to the main shaft 23, the main shaft 23 and the third gear wheel 26b may rotate with different rotational speeds.

In a similar way as for the first gear wheel pair 26, the second gear wheel pair 27 comprises a fourth gear wheel 27a and a fifth gear wheel 27b engaged with each other. The fourth gear wheel 27a is fixedly connected, i.e. rotationally locked to, the lay shaft 24. The fifth gear wheel 27b is arranged on the main shaft 23 and connectable thereto. In other words, the fifth gear wheel is selectively rotationally coupled to the main shaft 23. The connection of the fifth gear wheel 27b to the main shaft 23 to rotationally lock the fifth gear wheel thereto may be made by any previously known means therefore. The first gear wheel pair 26 and the second gear wheel pair 27 are configured to provide two different gear ratios, and thus provides two different gear steps.

The transmission assembly 14 further comprises a final gear wheel pair 28 comprising a sixth gear wheel 28a and a final gear wheel 28b (which may alternatively be described as a seventh gear wheel). The sixth gear wheel 28a is fixedly connected to, i.e. rotationally locked to, the main shaft 23. The final gear wheel 28b is arranged on the drive shaft 20.

When the electric drive axle assembly 10 is arranged in a vehicle, for example the vehicle 1 shown in Figure 1, the drive shaft 20 is configured to be connected to at least one drive wheel of the vehicle for the purpose of transmitting driving power thereto. In case the drive shaft 20 is connected to only one drive wheel of the vehicle, the final gear wheel 28b may be directly and fixedly connected to the drive shaft 20. However, in the third exemplifying embodiment shown in Figure 7, the drive shaft 20 is configured to be connected to two opposing drive wheels of the vehicle. In other words, the drive shaft 20 is configured to be connected to a first drive wheel at a first longitudinal end of the drive shaft 20, and a second drive wheel at a second longitudinal end of the drive shaft 20. In such a case, the drive shaft 20 may comprise, or consist of, a first drive shaft half-shaft 20a and a second drive shaft half-shaft 20b as shown in Figure 7. The first drive shaft half-shaft 20a is configured to be connected to said first drive wheel of the vehicle, and the second drive shaft half-shaft 20b is configured to be connected to said second drive wheel of the vehicle. The first and second drive shaft half-shafts 20a, 20b may optionally have a substantially equal length (i.e. longitudinal extension). However, the lengths of the first and second drive shaft half-shafts 20a, 20b are typically not the same. When the drive shaft 20 comprises a first drive shaft half-shaft 20a and a second drive shaft half-shaft 20b, the final gear wheel 28b is suitably connected to the drive shaft 20 via a differential (not shown).

Albeit not shown in the figure, when the electric drive shaft assembly is arranged in a vehicle, the drive shaft 20 may be configured to extend inside an axle beam structure. Such an axle beam structure may be configured to support the drive wheels of the vehicle as well as provide sufficient structural rigidity and support the weight of the electric drive axle assembly. The housing 11 of the transmission assembly 14 may suitably be mounted to the axle beam structure by a plurality of fastening elements.

The transmission assembly 14 may, if desired, further comprise a planetary gear 29 arranged on the main shaft 23 between the first gear wheel pair 26 and the second gear wheel pair 27. In case the transmission assembly 14 comprises the planetary gear 29, the main shaft comprises or consists of two main shaft half-shafts. One of the two main shaft half-shafts forming the main shaft 23 may be connected to a sun gear of the planetary gear 29 and the other one of said two main shaft half-shafts may be connected to a planet wheel carrier of the planetary gear 29, although other configurations are also possible.

As shown in Figure 7, the electric drive axle assembly 10 further comprises a reservoir arrangement 30 which constitutes a part of the lubrication system of the electric drive axle assembly 10. The reservoir arrangement 30 comprises a first oil reservoir 31 enclosing a lower portion of the final gear wheel 28b. The first oil reservoir is thus arranged below the drive shaft 20. The reservoir arrangement 30 further comprises a second oil reservoir 32. The second oil reservoir 32 may be configured to supply oil to the first oil reservoir 31 without any use of pump work. For said purpose, the second oil reservoir 32 may suitably be arranged above the first oil reservoir 31 and is in fluid communication with the first oil reservoir 31, for example via an aperture and/or channel in a bottom wall of the second oil reservoir 32. As shown in the figure, the second oil reservoir 32 may be arranged below the main shaft 32 and the sixth gear wheel 28a. Thereby, the second oil reservoir may be arranged so as to collect at least a portion of the oil supplied by the supply system to the sixth gear wheel 28a (if the supply system is configured to do so). The second oil reservoir 32 may also be arranged below the planetary gear 29, if present, and thereby be arranged so as to collect at least a portion of the oil supplied to the planetary gear 29 by the supply system of the lubrication system. Alternatively, or additionally, the second oil reservoir 32 may be configured to receive oil returning from a cooling system of the electrical machine 12. In such a case, a return conduit of the cooling system of the electrical machine 12 may be fluidly connected to, or otherwise arranged to supply oil to, the second oil reservoir 32. It should here be noted that the reservoir arrangement 30 shown in Figure 7 may correspond to the reservoir arrangement shown in Figure 6.

## Claims

1. An electric drive axle assembly (10) for a vehicle (1), the electric drive axle assembly (10) comprising:
an electrical machine (12);
a transmission assembly (14) configured to, when the electric drive axle assembly (10) is arranged in a vehicle (1), transmit driving power from the electrical machine (12) to at least one drive wheel (2) of said vehicle (1) via a drive shaft (20) of the transmission assembly (14), said transmission assembly (14) comprising a final gear wheel pair (28) comprising a final gear wheel (28b) arranged on the drive shaft (20); and
a lubrication system (15) comprising an oil sump (16), arranged in lower portion (11a) of a housing (11) of the transmission assembly (14), and a supply system (17) configured to supply oil from the oil sump (16) to one or more constituent components of the electric drive axle assembly (10);
the lubrication system (15) further comprising a reservoir arrangement (30) arranged so as to enclose a lower portion of the final gear wheel (28b), **characterized in that** the reservoir arrangement (30) comprises:
a first oil reservoir (31), arranged so as to enclose said lower portion of the final gear wheel (28b), and
a second oil reservoir (32) configured to supply oil to the first oil reservoir (31).

2. The electric drive axle assembly (10) according to claim 1, wherein the supply system (17) is configured to supply oil to a cooling system (18) of the electrical machine (12), said cooling system (18) comprising a return conduit (19) configured to return oil from the cooling system (18) of the electrical machine (12) to the reservoir arrangement (30).

3. The electric drive axle assembly (10) according to any one of the preceding claims, wherein the reservoir arrangement (30) comprises at least one drainage opening (38, 48) configured to allow drainage of oil from the reservoir arrangement (30) to the oil sump (16).

4. The electric drive axle assembly (10) according to any one of the preceding claims, wherein the reservoir arrangement (30) comprises an upper rim (37) encircling the lower portion of the final gear wheel (28b), said upper rim (37) arranged above a predefined maximum oil level (L-max) of the oil sump (16).

5. The electric drive axle assembly according to claim 1, wherein the second oil reservoir (32) is fluidly connected to the first oil reservoir (31) via an aperture (47) and/or channel arranged in a wall, preferably a bottom wall (46), of the second oil reservoir (32).

6. The electric drive axle assembly (10) according to any one of claims 1-5, wherein the second oil (32) reservoir is arranged above the first oil reservoir (31).

7. The electric drive axle assembly (10) according to any one of claims 1-6, wherein the supply system (17) is configured to supply oil to at least one gear wheel, other than the final gear wheel (28b), of the transmission assembly, and the second oil reservoir is arranged so as to collect at least a portion of the oil supplied to said at least one gear wheel.

8. The electric drive axle assembly (10) according to any one of claims 1-7, wherein
the first oil reservoir (31) comprises a first drainage opening configured to allow controlled drainage of oil from the first oil reservoir (31) to the oil sump (16), and
the second oil reservoir (32) comprises a second drainage opening (48) configured to allow controlled drainage of oil from the second oil reservoir (32) to the oil sump (16).

9. The electric drive axle assembly (10) according to any one of claims 1-8, wherein the transmission assembly (14) further comprises:
a main shaft (23) arranged in parallel with the drive shaft (20);
a lay shaft (24) arranged in parallel with the main shaft (23) and the drive shaft (20);
a first gear wheel (25) connected and rotationally locked to an output shaft (13) of the electrical machine (12);
a first gear wheel pair (26) comprising a second gear wheel (26a), rotationally locked to the layshaft (24), and a third gear wheel (26b) engaged with the second gear wheel (26a), said third gear wheel (26b) arranged on and connectable to the main shaft (23);
a second gear wheel pair (27) comprising a fourth gear wheel (27a), rotationally locked to the layshaft (24), and a fifth gear wheel (27b) engaged with the fourth gear wheel (27a), said fifth gear wheel (27b) arranged on and connectable to the main shaft (23);
wherein the first gear wheel (25) is engaged with the second gear wheel (26a) or the fourth gear wheel (27a),
the final gear wheel pair (28) comprises a sixth gear wheel (28a) rotationally locked to the main shaft (23) and engaged with the final gear wheel (28b), and
the transmission assembly (14) optionally further comprising a planetary gear (19) arranged on the main shaft (23) between the first gear wheel pair (26) and the final gear wheel pair (28).

10. The electric drive axle assembly (10) according to claim 9, wherein the second oil reservoir (32) is arranged between the final gear wheel (28b) and the electrical machine (12), and below the main shaft (23) of the transmission assembly (14).

11. The electric drive axle assembly (10) according to any one of claims 1 to 4, wherein the transmission assembly (14) further comprises:
a main shaft (23) arranged in parallel with the drive shaft (20);
a lay shaft (24) arranged in parallel with the main shaft (23) and the drive shaft (20);
a first gear wheel (25) connected and rotationally locked to an output shaft (13) of the electrical machine (12);
a first gear wheel pair (26) comprising a second gear wheel (26a), rotationally locked to the layshaft (24), and a third gear wheel (26b) engaged with the second gear wheel (26a), said third gear wheel (26b) arranged on and connectable to the main shaft (23);
a second gear wheel pair (27) comprising a fourth gear wheel (27a), rotationally locked to the layshaft (24), and a fifth gear wheel (27b) engaged with the fourth gear wheel (27a), said fifth gear wheel (27b) arranged on and connectable to the main shaft (23);
wherein the first gear wheel (25) is engaged with the second gear wheel (26a) or the fourth gear wheel (27a),
the final gear wheel pair (28) comprises a sixth gear wheel (28a) rotationally locked to the main shaft (23) and engaged with the final gear wheel (28b), and
the transmission assembly (14) optionally further comprising a planetary gear (19) arranged on the main shaft (23) between the first gear wheel pair (26) and the final gear wheel pair (28).

12. The electric drive assembly (10) according to any one of claims 9-11, wherein the final gear wheel (28b) is connected to the drive shaft (20) via a differential.

13. A vehicle (1) comprising the electric drive axle assembly (10) according to any one of the preceding claims.

## Patentansprüche

1. Elektrische Antriebsachsenanordnung (10) für ein Fahrzeug (1), wobei die Antriebsachsenanordnung (10) umfasst:
eine elektrische Maschine (12);
eine Übertragungsanordnung (14), die dazu konfiguriert ist, Antriebsleistung über eine Antriebswelle (20) der Übertragungsanordnung (14) von der elektrischen Maschine (12) an wenigstens ein Antriebsrad (2) des Fahrzeugs (1) zu übertragen, wenn die elektrische Antriebsachsenanordnung (10) in einem Fahrzeug (1) angeordnet ist, wobei die Übertragungsanordnung (14) ein Endzahnradpaar (28) umfasst, das ein Endzahnrad (28b) umfasst, das an der Antriebswelle (20) angebracht ist; und
ein Schmiermittelsystem (15) umfassend eine Ölwanne (16), die in einem unteren Abschnitt (11a) eines Gehäuses (11) der Übertragungsanordnung (14) angeordnet ist und ein Zufuhrsystem (17), das dazu konfiguriert ist, eine oder mehrere einzelne Komponenten der elektrischen Antriebsachsenanordnung (10) mit Öl aus der Ölwanne (16) zu versorgen;
wobei das Schmiermittelsystem (15) ferner umfasst:
eine Reservoiranordnung (30), die so angeordnet ist, dass sie einen unteren Abschnitt des Endzahnrads (28b) umschließt, **dadurch gekennzeichnet, dass** die Reservoiranordnung (30) Folgendes umfasst:
ein erstes Ölreservoir (31), das so angeordnet ist, dass es den unteren Abschnitt des Endzahnrads (28b) umfasst, und
ein zweites Ölreservoir (32), das dazu konfiguriert ist, das erste Ölreservoir (31) mit Öl zu versorgen.

2. Elektrische Antriebsachsenanordnung (10) nach Anspruch 1, wobei das Zufuhrsystem (17) dazu konfiguriert ist, ein Kühlsystem (18) der elektrischen Maschine (12) mit Öl zu versorgen, wobei das Kühlsystem (18) eine Rücklaufleitung (19) umfasst, die dazu konfiguriert ist, Öl vom Kühlsystem (18) der elektrischen Maschine (12) zu der Reservoiranordnung (30) zurückzuleiten.

3. Elektrische Antriebsachsenanordnung (10) nach einem der vorangehenden Ansprüche, wobei die Reservoiranordnung (30) wenigstens eine Abflussöffnung (38, 48) umfasst, die dazu konfiguriert ist, Ölabfluss von der Reservoiranordnung (30) zu der Ölwanne (16) zu ermöglichen.

4. Elektrische Antriebsachsenanordnung (10) nach einem der vorangehenden Ansprüche, wobei die Reservoiranordnung (30) einen oberen Rand (37) umfasst, der den unteren Abschnitt des Endzahnrads (28b) umgibt, wobei der obere Rand (37) über einem vordefinierten, maximalen Ölstand (L-max) der Ölwanne (16) angeordnet ist.

5. Elektrische Antriebsachsenanordnung nach Anspruch 1, wobei das zweite Ölreservoir (32) über eine Öffnung (47) und/oder einen in einer Wand, vorzugsweise einer unteren Wand (46) des zweiten Ölreservoirs (32) angeordneten Kanal, fluidisch mit dem ersten Ölreservoir (31) verbunden ist.

6. Elektrische Antriebsachsenanordnung (10) nach einem der Ansprüche 1-5, wobei das zweite Ölreservoir (32) über dem ersten Ölreservoir (31) angeordnet ist.

7. Elektrische Antriebsachsenanordnung (10) nach einem der Ansprüche 1-6, wobei das Zufuhrsystem (17) dazu konfiguriert ist, wenigstens ein Zahnrad außer dem Endzahnrad (28b) der Übertragungsanordnung mit Öl zu versorgen und das zweite Ölreservoir so angeordnet ist, dass es wenigstens einen Teil des Öls auffängt, das dem wenigstens einen Zahnrad zugeführt wird.

8. Elektrische Antriebsachsenanordnung (10) nach einem der Ansprüche 1-7, wobei
das erste Ölreservoir (31) eine erste Abflussöffnung umfasst, die dazu konfiguriert ist, kontrollierten Ölabfluss aus dem ersten Ölreservoir (31) in die Ölwanne (16) zu ermöglichen, und
das zweite Ölreservoir (32) eine zweite Abflussöffnung (48) umfasst, die dazu konfiguriert ist, kontrollierten Ölabfluss aus dem zweiten Ölreservoir (32) in die Ölwanne (16) zu ermöglichen.

9. Elektrische Antriebsachsenanordnung (10) nach einem der Ansprüche 1-8, die Übertragungsanordnung (14) ferner umfassend:
eine Hauptwelle (23), die parallel zu der Antriebswelle (20) angeordnet ist;
eine Vorgelegewelle (24), die parallel zu der Hauptwelle (23) und der Antriebswelle (20) angeordnet ist;
ein erstes Zahnrad (25), das an einer Ausgangswelle (13) der elektrischen Maschine (12) befestigt ist und mit dieser drehfest verbunden ist;
ein erstes Zahnradpaar (26) umfassend ein zweites Zahnrad (26a), das drehfest mit der Vorgelegewelle (24) verbunden ist und ein drittes Zahnrad (26b), das mit dem zweiten Zahnrad (26a) in Eingriff steht, wobei das dritte Zahnrad (26b) auf der Hauptwelle (23) angeordnet und mit dieser verbindbar ist;
ein zweites Zahnradpaar (27) umfassend ein viertes Zahnrad (27a), das drehfest mit der Vorgelegewelle (24) verbunden ist und ein fünftes Zahnrad (27b), das mit dem vierten Zahnrad (27a) in Eingriff steht, wobei das fünfte Zahnrad (27b) auf der Hauptwelle (23) angeordnet und mit dieser verbindbar ist;
wobei das erste Zahnrad (25) mit dem zweiten Zahnrad (26a) oder dem vierten Zahnrad (27a) in Eingriff steht,
wobei das Endzahnradpaar (28) ein sechstes Zahnrad (28a) umfasst, das drehfest mit der Hauptwelle (23) verbunden ist und mit dem Endzahnrad (28b) in Eingriff steht, und
die Übertragungsanordnung (14), die optional ferner ein Planetengetriebe (19) umfasst, das auf der Hauptwelle (23) zwischen dem ersten Zahnradpaar (26) und dem Endzahnradpaar (28) angeordnet ist.

10. Elektrische Antriebsachsenanordnung (10) nach Anspruch 9, wobei das zweite Ölreservoir (32) zwischen dem Endzahnrad (28b) und der elektrischen Maschine (12) und unter der Hauptwelle (23) der Übertragungsanordnung (14) angeordnet ist.

11. Elektrische Antriebsachsenanordnung (10) nach einem der Ansprüche 1 bis 4, die Übertragungsanordnung (14) ferner umfassend:
eine Hauptwelle (23), die parallel zu der Antriebswelle (20) angeordnet ist;
eine Vorgelegewelle (24), die parallel zu der Hauptwelle (23) und der Antriebswelle (20) angeordnet ist;
ein erstes Zahnrad (25), das an einer Ausgangswelle (13) der elektrischen Maschine (12) befestigt ist und mit dieser drehfest verbunden ist;
ein erstes Zahnradpaar (26) umfassend ein zweites Zahnrad (26a), das drehfest mit der Vorgelegewelle (24) verbunden ist und ein drittes Zahnrad (26b), das mit dem zweiten Zahnrad (26a) in Eingriff steht, wobei das dritte Zahnrad (26b) auf der Hauptwelle (23) angeordnet und mit dieser verbindbar ist;
ein zweites Zahnradpaar (27) umfassend ein viertes Zahnrad (27a), das drehfest mit der Vorgelegewelle (24) verbunden ist und ein fünftes Zahnrad (27b), das mit dem vierten Zahnrad (27a) in Eingriff steht, wobei das fünfte Zahnrad (27b) auf der Hauptwelle (23) angeordnet und mit dieser verbindbar ist;
wobei das erste Zahnrad (25) mit dem zweiten Zahnrad (26a) oder dem vierten Zahnrad (27a) in Eingriff steht,
wobei das Endzahnradpaar (28) ein sechstes Zahnrad (28a) umfasst, das drehfest mit der Hauptwelle (23) verbunden ist und mit dem Endzahnrad (28b) in Eingriff steht, und
die Übertragungsanordnung (14), die optional ferner ein Planetengetriebe (19) umfasst, das auf der Hauptwelle (23) zwischen dem ersten Zahnradpaar (26) und dem Endzahnradpaar (28) angeordnet ist.

12. Elektrische Antriebsanordnung (10) nach einem der Ansprüche 9-11, wobei das Endzahnrad (28b) über ein Differential mit der Antriebswelle (20) verbunden ist.

13. Fahrzeug (1) umfassend die elektrische Antriebsachsenanordnung (10) nach einem der vorangehenden Ansprüche.

## Revendications

1. Ensemble d'essieu moteur électrique (10) pour un véhicule (1), l'ensemble d'essieu moteur électrique (10) comprenant :
une machine électrique (12) ;
un bloc transmission (14) configuré pour, lorsque l'ensemble d'essieu moteur électrique (10) est agencé dans un véhicule (1), transmettre une puissance d'entraînement depuis la machine électrique (12) vers l'au moins une roue motrice (2) dudit véhicule (1) par l'intermédiaire d'un arbre d'entraînement (20) du bloc transmission (14), ledit bloc transmission (14) comprenant une paire de roues d'engrenage finales (28) comprenant une roue d'engrenage finale (28b) agencée sur l'arbre d'entraînement (20) ; et
un système de lubrification (15) comprenant un carter d'huile (16), agencé dans la portion inférieure (11a) d'un boîtier (11) du bloc transmission (14), et un système d'alimentation (17) configuré pour alimenter de l'huile depuis le carter d'huile (16) vers un ou plusieurs composants constitutifs de l'ensemble d'essieu moteur électrique (10) ;
le système de lubrification (15) comprenant en outre un agencement réservoir (30) agencé de manière à enfermer une portion inférieure de la roue d'engrenage finale (28b), **caractérisé en ce que** l'agencement réservoir (30) comprend :
un premier réservoir d'huile (31), agencé de manière à enfermer ladite portion inférieure de la roue d'engrenage finale (28b), et
un deuxième réservoir d'huile (32) configuré pour alimenter en huile le premier réservoir d'huile (31).

2. Ensemble d'essieu moteur électrique (10) selon la revendication 1, dans lequel le système d'alimentation (17) est configuré pour alimenter en huile un système de refroidissement (18) de la machine électrique (12), ledit système de refroidissement (18) comprenant un conduit de retour (19) configuré pour renvoyer l'huile du système de refroidissement (18) de la machine électrique (12) à l'agencement réservoir (30).

3. Ensemble d'essieu moteur électrique (10) selon l'une quelconque des revendications précédentes, dans lequel l'agencement réservoir (30) comprend au moins une ouverture de vidange (38, 48) configurée pour permettre la vidange d'huile depuis l'agencement réservoir (30) vers le carter d'huile (16).

4. Ensemble d'essieu moteur électrique (10) selon l'une quelconque des revendications précédentes, dans lequel l'agencement réservoir (30) comprend un rebord supérieur (37) encerclant la portion inférieure de la roue d'engrenage finale (28b), ledit rebord supérieur (37) étant agencé au-dessus d'un niveau d'huile maximal (L-max) prédéfini du carter d'huile (16).

5. Ensemble d'essieu moteur électrique selon la revendication 1, dans lequel le deuxième réservoir d'huile (32) est en communication fluidique avec le premier réservoir d'huile (31) par l'intermédiaire d'un orifice (47) et/ou d'un canal agencé dans une paroi, de préférence une paroi de fond (46), du deuxième réservoir d'huile (32).

6. Ensemble d'essieu moteur électrique (10) selon l'une quelconque des revendications 1 à 5, dans lequel le deuxième réservoir d'huile (32) est agencé au-dessus du premier réservoir d'huile (31).

7. Ensemble d'essieu moteur électrique (10) selon l'une quelconque des revendications 1 à 6, dans lequel le système d'alimentation (17) est configuré pour alimenter en huile à au moins une roue d'engrenage, autre que la roue d'engrenage finale (28b), du bloc transmission, et le deuxième réservoir d'huile est agencé de manière à collecter au moins une portion de l'huile alimentée vers ladite au moins une roue d'engrenage.

8. Ensemble d'essieu moteur électrique (10) selon l'une quelconque des revendications 1 à 7, dans lequel
le premier réservoir d'huile (31) comprend une première ouverture de vidange configurée pour permettre une vidange d'huile commandée depuis le premier réservoir d'huile (31) vers le carter d'huile (16), et
le deuxième réservoir d'huile (32) comprend une deuxième ouverture de vidange (48) configurée pour permettre une vidange d'huile commandée depuis le deuxième réservoir d'huile (32) vers le carter d'huile (16).

9. Ensemble d'essieu moteur électrique (10) selon l'une quelconque des revendications 1 à 8, dans lequel le bloc transmission (14) comprend en outre :
un arbre principal (23) agencé en parallèle avec l'arbre d'entraînement (20) ;
un arbre intermédiaire (24) agencé en parallèle avec l'arbre principal (23) et l'arbre d'entraînement (20) ;
une première roue d'engrenage (25) connectée et bloquée en rotation à un arbre de sortie (13) de la machine électrique (12) ;
une première paire de roues d'engrenage (26) comprenant une deuxième roue d'engrenage (26a), bloquée en rotation sur l'arbre intermédiaire (24), et une troisième roue d'engrenage (26b) en prise avec la deuxième roue d'engrenage (26a), ladite troisième roue d'engrenage (26b) étant agencée sur, et pouvant être connectée à, l'arbre principal (23) ;
une deuxième paire de roues d'engrenage (27) comprenant une quatrième roue d'engrenage (27a), bloquée en rotation sur l'arbre intermédiaire (24), et une cinquième roue d'engrenage (27b) en prise avec la quatrième roue d'engrenage (27a), ladite cinquième roue d'engrenage (27b) étant agencée sur, et pouvant être connectée à, l'arbre principal (23) ;
dans lequel la première roue d'engrenage (25) est en prise avec la deuxième roue d'engrenage (26a) ou la quatrième roue d'engrenage (27a),
la paire de roues d'engrenage finale (28) comprend une sixième roue d'engrenage (28a) bloquée en rotation sur l'arbre principal (23) et en prise avec la roue d'engrenage finale (28b), et
le bloc transmission (14) comprenant en outre facultativement un engrenage planétaire (19) agencé sur l'arbre principal (23) entre la première paire de roues d'engrenage (26) et la paire de roues d'engrenage finale (28).

10. Ensemble d'essieu moteur électrique (10) selon la revendication 9, dans lequel le deuxième réservoir d'huile (32) est agencé entre la roue d'engrenage finale (28b) et la machine électrique (12), et en dessous de l'arbre principal (23) du bloc transmission (14).

11. Ensemble d'essieu moteur électrique (10) selon l'une quelconque des revendications 1 à 4, dans lequel le bloc transmission (14) comprend en outre :
un arbre principal (23) agencé en parallèle avec l'arbre d'entraînement (20) ;
un arbre intermédiaire (24) agencé en parallèle avec l'arbre principal (23) et l'arbre d'entraînement (20) ;
une première roue d'engrenage (25) connectée et bloquée en rotation à un arbre de sortie (13) de la machine électrique (12) ;
une première paire de roues d'engrenage (26) comprenant une deuxième roue d'engrenage (26a), bloquée en rotation sur l'arbre intermédiaire (24), et une troisième roue d'engrenage (26b) en prise avec la deuxième roue d'engrenage (26a), ladite troisième roue d'engrenage (26b) étant agencée sur, et pouvant être connectée à, l'arbre principal (23) ;
une deuxième paire de roues d'engrenage (27) comprenant une quatrième roue d'engrenage (27a), bloquée en rotation sur l'arbre intermédiaire (24), et une cinquième roue d'engrenage (27b) en prise avec la quatrième roue d'engrenage (27a), ladite cinquième roue d'engrenage (27b) étant agencée sur, et pouvant être connectée à, l'arbre principal (23) ;
dans lequel la première roue d'engrenage (25) est en prise avec la deuxième roue d'engrenage (26a) ou la quatrième roue d'engrenage (27a),
la paire de roues d'engrenage finale (28) comprend une sixième roue d'engrenage (28a) bloquée en rotation sur l'arbre principal (23) et en prise avec la roue d'engrenage finale (28b), et
le bloc transmission (14) comprenant en outre facultativement un engrenage planétaire (19) agencé sur l'arbre principal (23) entre la première paire de roues d'engrenage (26) et la paire de roues d'engrenage finale (28).

12. Ensemble moteur électrique (10) selon l'une quelconque des revendications 9 à 11, dans lequel la roue d'engrenage finale (28b) est connectée à l'arbre d'entraînement (20) par l'intermédiaire d'un différentiel.

13. Véhicule (1) comprenant l'ensemble d'essieu moteur électrique (10) selon l'une quelconque des revendications précédentes.
